(19) Europäisches Patentamt
European Patent Office
Office européen des brevets

(11) Veröffentlichungsnummer: **0 208 286**
**A2**

(12) # EUROPÄISCHE PATENTANMELDUNG

(21) Anmeldenummer: 86109227.8

(51) Int.Cl.[4]: **C 08 J 9/02**

(22) Anmeldetag: 07.07.86

(30) Priorität: 09.07.85 DE 3524493

(43) Veröffentlichungstag der Anmeldung:
14.01.87 Patentblatt 87/3

(84) Benannte Vertragsstaaten:
AT BE CH DE FR GB IT LI NL SE

(71) Anmelder: **WACKER-CHEMIE GMBH**
**Prinzregentenstrasse 22**
**D-8000 München 22(DE)**

(72) Erfinder: **Mayer, Hans, Dr. Dipl.-Chem.**
**Friedrich-Ebert-Strasse 18**
**D-8263 Burghausen(DE)**

(72) Erfinder: **Mühlhofer, Rudolf**
**Mehringer Strasse 57**
**D-8263 Burghausen(DE)**

(72) Erfinder: **Deubzer, Bernward, Dr. Dipl.-Chem.**
**Virchowstrasse 14**
**D-8263 Burghausen(DE)**

(72) Erfinder: **Mayerhofer, Walter**
**Schützing 12**
**D-8261 Marktl(DE)**

(54) **Verfahren zur Herstellung von Schaumstoffen.**

(57) Schaumstoffe werden durch Umsetzung von Si-gebundenen Wasserstoff enthaltender Verbindung mit Hydroxylgruppen enthaltender Verbindung dadurch hergestellt, daß bei dieser Umsetzung als Si-gebundenen Wasserstoff enthaltende Verbindung mindestens zum Teil solche verwedet wird, die in ein und demselben Molekül sowohl Si-gebundenen Wasserstoff als auch mindestens einen SiC-gebundenen Rest mit basischem Stickstoff aufweist.

EP 0 208 286 A2

Croydon Printing Company Ltd.

0208286

W A C K E R - C H E M I E
G M B H

5. März 1985
PAT/Dr.Ru-bw

Wa 8447-s/Wa 8516-s

# Verfahren zur Herstellung von Schaumstoffen

Es ist bereits bekannt Schaumstoffe herzustellen, wobei die Hohlräume in diesen Schaumstoffen durch Abspaltung von Si-gebundenem Wasserstoff durch Umsetzung mit Hydroxylgruppe(n) enthaltender Verbindung bewirkt werden. Hierzu wird z.B. auf GB 867619, veröffentlicht 10. Mai 1961, Midland Silicones Limited, verwiesen.

Es bestand nun die Aufgabe, Schaumstoffe durch Umsetzung von Si-gebundenen Wasserstoff enthaltender Verbindung mit Hydroxylgruppe(n) enthaltender Verbindung herzustellen, wobei innerhalb besonders kurzer Zeit besonders dimensionsbeständige Schäume erhalten werden. Diese Aufgabe wird durch die Erfindung gelöst.

Gegenstand der Erfindung ist ein Verfahren zur Herstellung von Schaumstoffen durch Umsetzung von Si-gebundenen Wasserstoff enthaltender Verbindung mit Hydroxylgruppe(n) enthaltender Verbindung, dadurch gekennzeichnet, daß bei dieser Umsetzung als Si-gebundenen Wasserstoff enthaltende Verbindung mindestens zum Teil solche verwendet wird, die in ein und demselben Molekül sowohl Si-gebundenen Wasserstoff als auch mindestens einen SiC-gebundenen Rest mit basischem Stickstoff aufweist.

Die bei dem erfindungsgemäßen Verfahren eingesetzten Organopolysiloxane können linear, verzweigt oder cyclisch sein.

Die erfindungsgemäß verwendeten Organopolysiloxane mit Si-gebundenem Wasserstoff sind vorzugsweise solche aus Einheiten der Formel

$$R_xR^1_yH_z(OR^2)_pSiO_{\frac{4-x-y-z-p}{2}} ,$$

worin R gleiche oder verschiedene, einwertige, von basischem Stickstoff freie, SiC-gebundene organische Reste, $R^1$ einwertige, SiC-gebundene Reste mit basischem Stickstoff, die ebenfalls gleich oder verschieden sein können, $R^2$ gleiche oder verschiedene Alkylreste mit 1 bis 4 Kohlenstoffatom(en) je Rest bedeutet, x 0, 1, 2 oder 3, durchschnittlich 0 bis 2 , durchschnittlich vorzugsweise 0 bis 1,8 , y 0 oder 1, durchschnittlich 0,1 bis 0,6 , durchschnittlich vorzugsweise 0,15 bis 0,3 , z 0 oder 1, durchschnittlich 0,2 bis 1 , durchschnittlich vorzugsweise 0,5 bis 1 , p 0,1,2 oder 3, durchschnittlich 0 bis 0,8, durchschnittlich vorzugsweise 0,01 bis 0,6 ist und die Summe der jeweiligen Durchschnittswerte von x,y,z und p höchstens 3,4 ist.

Beispiele für von basischem Stickstoff freie, SiC-gebundene organische Reste R sind insbesondere Kohlenwasserstoffreste mit 1 bis 20 Kohlenstoffatom(en) je Rest, wie Alkylreste, z.B. der Methyl, Ethyl, n-Propyl- und Isopropylrest sowie Octadecylreste; aliphatische Kohlenwasserstoffreste mit mindestens einer Doppelbindung, z.B. der Vinyl- und Allylrest sowie Butadienylreste; cycloaliphatische Kohlenwasserstoffreste z.B. der Cyclohexlrest und Methylcyclohexylreste; aromatische Kohlenwasserstoffreste, z.B. der Phenylrest und Naphthylreste; Alkarylreste, z.B. Tolylreste und Aralkylreste, z.B. der Benzylrest. Diese Kohlenwasserstoffreste können Substituenten aufweisen, die gegenüber Si-gebundenem

Wasserstoff, basischem Stickstoff und Hydroxylgruppen bei Temperaturen unter 50°C inert sind. Beispiele für derartige substituierte Kohlenwasserstoffreste sind fluorierte Kohlenwasserstoffreste, wie der 3,3,3-Trifluorpropylrest; aus Kohlenstoff-, Wasserstoff-, Ethersauerstoff- und Fluoratom(en) aufgebaute, einwertige aliphatische Reste, wie der 1,1,2,2,3,3-Hexafluorpropyloxypropylrest und der 1,1,2,2-Tetrafluorethoxypropylrest, und Ethersauerstoff als einzige(n) Substituenten enthaltende, einwertige Kohlenwasserstoffreste, wie der p-Methoxyphenylrest.

Insbesondere wegen der leichten Zugänglichkeit sind als von basischem Stickstoff freie, SiC-gebundene organische Reste in den erfindungsgemäß verwendeten Organopolysiloxanen Methylreste bevorzugt. Weiterhin ist bevorzugt, daß an jedes Siliciumatom, an das ein Wasserstoffatom direkt gebunden ist, auch ein Kohlenwasserstoffrest, insbesondere ein Methylrest, gebunden ist.

Als SiC-gebundene Reste mit basischem Stickstoff und damit als Reste $R^1$ sind solche der Formel

$$R^3_2 NR^4-$$

bevorzugt, worin $R^3$ Wasserstoff oder gleiche oder verschiedene Alkyl- oder Amino- bzw. Iminoalkylreste und $R^4$ einen zweiwertigen Kohlenwasserstoffrest bedeutet.

Die Beispiele für Alkylreste R gelten im vollen Umfang auch für die Alkylreste $R^3$. Vorzugsweise ist jedoch an jedes Stickstoffatom in den Resten der Formel

$$R^3_2 NR^4-$$

mindestens ein Wasserstoffatom gebunden.

Vorzugsweise erhalten die zweiwertigen Kohlenwasserstoffreste $R^4$ höchstens 20 Kohlenwasserstoffatome je Rest. Beispiele für derartige Kohlenwasserstoffreste sind der Methylen und Ethylenrest, sowie Propylen-, Butylen-, Cyclohexylen-, Octadecylen-, Phenylen- und Butenylenreste. Insbesondere wegen der leichten Zugänglichkeit ist der n-Propylenrest bevorzugt. Besonders bevorzugt als SiC-gebundener Rest mit basischem Stickstoff und damit als Rest $R^1$ ist der Rest der Formel

$H_2N(CH_2)_2NH(CH_2)_3-$.

Weitere Beispiele für SiC-gebundene Reste mit basischem Stickstoff und damit für Reste $R^1$ sind solche der Formel

$H_2N(CH_2)_3-$
$H_2N(CH_2)_2-$
$H_3CNH(CH_2)_3-$
$H_2N(CH_2)_5-$
$H(NHCH_2CH_2)_3-$ und
$n-C_4H_9NH(CH_2)_2NH(CH_2)_3-$

Beispiele für Reste $R^2$ sind insbesondere der Methyl-, Ethyl- und Isopropylrest.

Die erfindungsgemäß verwendeten Verbindungen mit Si-gebundenem Wasserstoff und mindestens einem SiC-gebundenen Rest mit basischem Stickstoff können beispielsweise durch Aquilibrieren bzw. Kondensieren von z.B. gamma-Aminoethylaminopropyltrimethoxysilan oder gamma-Aminoethylaminopropylmethyldimethoxysilan oder Gemischen aus derartigen Silanen mit Organopolysiloxanen, die frei von basischem Stickstoff sind, jedoch Si gebundenen Wasserstoff enthalten, hergestellt werden. Die dabei verwendeten Organopolysiloxane sind vorzugsweise durch Trimethylsiloxygruppen endblockierte Methylhydrogenpolysiloxane oder Mischpolymere aus Trimethylsiloxygruppen, Dimethylsiloxan- und Methylhydrogensiloxaneinheiten.

Als Hydroxylgruppen(n) enthaltene Verbindungen, durch deren Umsetzung mit Si-gebundenem Wasserstoff die Schaumbildung und die Vernetzung des Organopolysiloxans, das die SiC-gebundenen Restemit basischem Stickstoff aufweist, bewirkt wird, sind bei der Durchführung des erfindungsgemäßen Verfahrens Wasser, mindestens zwei Hydroxylgruppen je Molekül enthaltende Alkohole, wie Ethylenglykol, Glyzerin oder Triethaloamin, sowie Organosilanole und Organopolysiloxanole, wie Dimethylpolysiloxanole bevorzugt.

Vorzugsweise wird Hydroxylgruppe(n) enthaltende Verbindungen, durch deren Umsetzung mit Si-gebundenem Wasserstoff die Schaumbildung und die Vernetzung des Organopolysiloxans, das die SiC-gebundenen Reste mit basischem Stickstoff aufweist, bewirkt wird, in Mengen von 1 bis 20 Grammäquivalent Hydroxylgruppe je Grammatom Si-gebundenen Wasserstoffs eingesetzt.

Das erfindungsgemäße Verfahren wird vorzugsweise bei -20°C bis +50°C und dem Druck der umgebenden Atmosphäre also bei 1020 hPa (absolut) oder etwa 1020 hPa (absolut) durchgeführt.

Bei der Durchführung des erfindungsgemäßen Verfahrens kann die Abspaltung von Si-gebundenem Wasserstoff durch Zugabe wasserfreier Säure, wie Eisessig, voroder gleichzeitig mit der Zugabe von Hydroxylgruppe(n) enthaltender Verbindung, durch deren Umsetzung mit Si-gebundenem Wasserstoff die Schaumbildung und die Vernetzung von Organopolysiloxanen, das mindestens einen SiC-gebundenen Rest mit basischem Stickstoff aufweist, bewirkt wird, verlangsamt werden.

Die erfindungsgemäß hergestellten Schäume eignen sich z.B. als hydrophobe Baustoffe und als Wärmedämmstoffe in Gebäuden, Land-, Wasser- und Luftfahrzeugen.

Insbesondere bei der Herstellung von Wärmedämmstoffen können bei dem erfindungsgemäßen Verfahren Trübungsmittel mitverwendet werden, wie sie bei der Herstellung von Wärmedämmstoffen üblicherweise mitverwendet werden. Beispiele für derartige Trübungsmittel sind Ilmenit, Titandioxyd, einschließlich Rutil, Chromoxyd, Manganoxyd, Zirkon, Eisenoxyd, Bleimonoxyd, sowie Carbide des Siliciums, Bors, Tantals oder Wolframs, metallisches Aluminium, Wolfram oder Silicium oder Gemische aus mindestens zwei solcher Trübungsmittel. Trübungsmittel können in Mengen von bis zu insgesamt 60 Gewichtsprozent des jeweiligen Schaumstoffs vorliegen.

Zusätzlich zu Siliciumverbindungen, die in ein und demselben Molekül sowohl Si-gebundenen Wasserstoff als auch mindestens einen SiC-gebundenen Rest mit basischem Stickstoff enthalten, können bei dem erfindungsgemäßen Verfahren weitere Siliciumverbindungen mitverwendet werden.

Beispiel 1

a) Ein Gemisch aus 400 g eines durch Trimethylsiloxygruppen endblockierten Methylhydrogenpolysiloxans mit einer Viskosität von etwa 20 $mm^2 \cdot s^{-1}$ bei 25°C und 165 g gamma-Aminoethylaminopropyltrimethoxysilan wird 6 Stunden unter Stickstoff auf 140°C erwärmt. Das erhaltene, unter Luftabschluß beständige Organopolysiloxan ist eine wasserklare Flüssigkeit mit einer Viskosität von etwa 7,5 $mm^2 \cdot s^{-1}$ bei 25°C. Es besitzt eine Aminzahl (= Anzahl der ml 1-n-HCL, die zum Neutralisieren von 1 g Substanz erforderlich sind) von 2,63, einen Aminstickstoffgehalt von 3,7 Gew.-% und enthält 1,1 Gew.-% Si-gebundenen Wasserstoff.

b) Zu 28,25 g des Organopolysiloxans, dessen Herstellung vorstehend unter a) beschrieben wurde, werden 10 g Wasser gegeben. Nach 1 bis 2 Sekunden tritt heftige Gasentwicklung auf und es wird ein Schaum erhalten, der seine Form

behält. Die Umsetzung ist nach 15 Sekunden beendet und das verschäumte Organopolysiloxan vernetzt.

Beispiel 2

Zu 20 g des Organopolysiloxans, dessen Herstellung in Beispiel 1 unter a) beschrieben wurde, werden zunächst 2,5 g Eisessig und dann 7 g Wasser gegeben. Die Gasentwicklung ist langsamer als bei Beispiel 1.

Beispiel 3

Die in Beispiel 2 beschriebene Arbeitsweise wird wiederholt mit der Abänderung, daß 5 g Eisessig anstelle der 2,5 g Eisessig verwendet werden. Die Gasentwicklung ist noch langsamer als bei Beispiel 1.

Vergleichsversuch

Zu 20 g des durch Trimethylsiloxygruppen endblockierten Methylhydrogenpolysiloxans mit einer Viskosität von etwa 20 $mm^2 \cdot s^{-1}$ bei 25°C werden zunächst 8,25 g gamma-Aminoethylaminopropyltrimethoxysilan und dann 7 g Wasser gegeben. Die Schaumbildung verläuft langsamer als bei Beispiel 1 und der Schaum fällt fast völlig in sich zusammen, bevor das Organopolysiloxan vernetzt.

Beispiel 4

a) In einen mit Rührer, Tropftrichter und Rückflußkühler ausgestatteten 1 l-Dreihalskolben werden unter Rühren 150 g gamma-Aminoethylaminopropyltrimethoxysilan zu einem Gemisch aus 0,2 g Kaliumhydroxyd in 4 g Methanol und 500 g eines Polyethylsilikats mit einem durchschnittlichen Molekulargewicht von etwa 450 g/Mol und einer Viskosität von 4 $mm^2 \cdot s^{-1}$ bei 25°C gegeben. Das so erhaltene Gemisch wird 6 Stunden auf 100°C erwärmt. Nach dem Abkühlen des Gemisches auf 30°C wird es mit 2,5 ml wäßriger 10 gew.-%iger Salzsäure

vermischt. Durch Erwärmen auf bis zu 130°C werden 1,06 g des Kolbeninhalts abdestilliert. Schließlich wird vom Kaliumchlorid abfiltriert.

b) Zu 100 g eines Gemisches aus 50 Gewichtsteilen des von Si-gebundenem Wasserstoff freien Organopolysiloxans, dessen Herstellung vorstehend unter a) beschrieben wurde, 50 Gewichtsteilen des Organopolysiloxans, dessen Herstellung in Beispiel 1 unter a) beschrieben wurde, 50 Gewichtsteilen des in Beispiel 1 unter a) näher beschriebenen Methylhydrogenpolysiloxans, 50 Gewichtsteilen gamma-Aminoethylaminopropyltrimethoxysilan und 60 Gewichtsteilen pulverförmigem Ilmenit werden 15 g Glycerin gegeben. Nach ein bis zwei Sekunden tritt heftige Gasentwicklung auf und es wird ein Schaum erhalten, der seine Form behält. Die Umsetzung ist nach 15 Sekunden beendet und die Organopolysiloxane sind vernetzt. Auf diese Weise wird ein ausgezeichneter Wärmedämmstoff erhalten.

Beispiel 5

Die in Beispiel 4 unter b) beschriebene Arbeitsweise wird wiederholt mit der Abänderung, daß anstelle der 60 Gewichtsteile Ilmenit 60 Gewichtsteile pulverförmiges Titandioxyd verwendet werden. Es wird ebenfalls ein ausgezeichneter Wärmedämmstoff erhalten.

PATENTANSPRÜCHE

1. Verfahren zur Herstellung von Schaumstoffen durch Umsetzung von Si-gebundenen Wasserstoff enthaltender Verbindungen mit Hydroxylgruppe(n) enthaltender Verbindung, d a - d u r c h   g e k e n n z e i c h n e t , daß bei dieser Umsetzung als Si-gebundenen Wasserstoff enthaltende Verbindung mindestens zum Teil solche verwendet wird, die in ein und demselben Molekül sowohl Si-gebundenen Wasserstoff als auch mindestens einen SiC-gebundenen Rest mit basischem Stickstoff aufweist.

2. Verfahren nach Anspruch 1, d a d u r c h   g e k e n n - z e i c h n e t , daß als Verbindung mit Si-gebundenem Wasserstoff und mindestens einem SiC-gebundenen Rest mit basischem Stickstoff solche verwendet sind, die durch Äquilibrieren von durch Trimethylsiloxygruppen endblockiertem Methylhydrogenpolysiloxan mit gamma-Aminoethylamino-propyltrimethoxysilan erhältlich ist.